# EUROPEAN PATENT SPECIFICATION

(11) **EP 3 579 494 B1**
(45) Date of publication and mention of the grant of the patent: **21.04.2021**
(21) Application number: 18176801.1
(22) Date of filing: 08.06.2018
(51) Int. Cl.: H04L 9/32, H04W 4/24, H04L 29/06, H04W 8/12, H04M 15/00

(54) **BLOCKCHAIN BASED ROAMING**
BLOCKCHAIN-BASIERTES ROAMING
ITINÉRANCE À BASE DE CHAÎNE DE BLOCS

(43) Date of publication of application: 11.12.2019
(73) Proprietor: Deutsche Telekom AG, 53113 Bonn (DE)
(72) Inventor: VOTTA, Francesco, 10435 Berlin (DE)
(74) Representative: Vossius & Partner Patentanwälte Rechtsanwälte mbB

(56) References cited:
- WO-A1-2018/020376
- US-A1- 2018 060 835
- Deloitte: "Blockchain @ Telco How blockchain can impact the telecommunications industry and its relevance to the C-Suite Introduction to blockchain", , 28 November 2016 (2016-11-28), XP055394340, Retrieved from the Internet: URL:https://www2.deloitte.com/content/dam/ Deloitte/za/Documents/technology-media-tel ecommunications/za_TMT_Blockchain_TelCo.pd f [retrieved on 2017-07-27]
- JOVER ROGER PIQUERAS ET AL: "dHSS - distributed Peer-to-Peer implementation of the LTE HSS based on the bitcoin/namecoin architecture", 2016 IEEE INTERNATIONAL CONFERENCE ON COMMUNICATIONS WORKSHOPS (ICC), IEEE, 23 May 2016 (2016-05-23), pages 354-359, XP032919891, DOI: 10.1109/ICCW.2016.7503813 [retrieved on 2016-07-05]

## Description

The invention relates to the field of telecommunication. In particular, the invention relates to a method and system for blockchain based roaming.

Blockchain is a technology that allows multiple parties to share a common, append-only database. This is useful for enabling transactions between organizations, departments or individuals without relying on an intermediary, by creating a transparent, time-stamped history of every transaction. The database grows larger with every new transaction and must be stored in multiple locations, however, this is often cheaper than paying a trusted intermediary to operate a centralized database, and it is also highly resilient because there is no single point of failure.

The main feature of the blockchain technology is that it is a decentralized system for managing security and information. This is fundamentally different from most existing solutions where data is kept and managed within a central system, with security built around it, rather than within it.

The blockchain technology provides an architecture for so-called trustless trust. It allows the users to trust the outputs of the system without trusting any actor within the system.

In detail, a blockchain is a list of validated blocks, each linking to its predecessor all the way to a genesis block, i.e. a first initial block. The aforementioned term block of the blockchain refers to a data structure containing a grouping of so called transactions, preferably marked with a timestamp, and having a fingerprint of a respective previous block. The block header is preferably hashed to produce a proof of work, thereby validating the transactions. Valid blocks are then added to the main blockchain by network consensus. A transaction, in simple terms, is a signed data structure. Transactions are transmitted over the blockchain network, collected by miners, and included into blocks, before made permanent on the blockchain.

The term blockchain is typically also used to describe an implementation of a blockchain network. In other words, a blockchain provides a distributed, shared state all participants agree on using a consensus algorithm.

In practice, smart contracts are used for enforcing business logic on a blockchain, defining particular forms of tokens and so forth. Smart contracts, as first proposed by Nick Szabo in 1994, are computer programs that can enforce rules without requiring a third party.

The execution of a smart contract is preferably facilitated by means of tokens. It is usually differentiated between two types of token: Usage and Work Tokens. Usage Tokens, which act like native currency in context of a respective distributed application and/or smart contract. In an example, if the used of a service is required the respective payment may be paid for with a respective token. While these tokens have monetary value they won't give the owner any particular rights or privilege within the network itself.

In contrast, work tokens identify the owner as a sort of shareholder in the distributed application and/or smart contract. Because of that, the owner may preferably be entitled to have a say in the direction that the distributed application and/or smart contract takes.

In the Bitcoin blockchain, a basic version of smart contracts is implemented through the means of a scripting system that facilitates use cases like multiuser accounts (multi-signature wallets) and escrow services.

Ethereum is a more versatile blockchain than the Bitcoin blockchain. The main technology advancement of the Ethereum blockchain is the introduction of a general purpose and turing complete smart contract system which is manifested in the Ethereum Virtual Machine (EVM).

In the EVM, program code is executed by miners and other network participants who verify state changes. A smart contract is typically written in a high level programming language, like Solidity or Viper, and compiled to bytecode. This bytecode can be deployed on the blockchain whereby an address is returned at which the smart contract's functions can be called. Execution requires sending a transaction to the contract's address, while specifying which function is to be executed with parameters.

Now returning to the field of telecommunication, state of the art mobile telecommunication networks are operated by different mobile network operators (MNO). A MNO may own a mobile telecommunication network, i.e. may own some network infrastructure, such as antennas etc. Another MNO may own also own network infrastructure of the same network.

In some cases the complete network infrastructure or parts of it may be owned by at least one third party, which may or may not be an MNO.

"Blockchain @ Teco How blockchain can impact the telecommunications industry and its relevance to the C-Suite Introduction to blockchain" by Deloitte; relates a permissioned blockchain being implemented between every pair of operators which have a roaming agreement. Designated nodes from both operators act as miners to verify the sanctity of each transaction broadcasted on the network. The roaming agreement is implemented between the HPMN and the VPMN as a smart contract that is triggered when a transaction containing the CDR data is broadcasted on the blockchain network.

R.P. Jover et al. "dHSS - distributed Peer-to-Peer implementation of the LTE HSS based on the bitcoin/namecoin architecture"; 2016 IEEE International Conference on Communications Workshops (ICC), pages 354-359; relates to a distributed and secure Peer-to-Peer (P2P) implementation of the HSS. Based on the Bitcoin/Namecoin framework, this architecture drifts away from the symmetric key model of the standard HSS and proposes a robust public key infrastructure.

In other words, different parts of the network infrastructure may be owned by different MNOs or even a third party. The different parts may be different countries but may also be different network cells.

On the other hand, a MNO typically has a contract with a customer for using the mobile telecommunication network. The customer may typically use telecommunication services of the telecommunication network at different locations. In other words, the customer may at some time use a network service, while not being connected to network infrastructure, which is directly owned by the MNO he is associated with via aforementioned contract. Such a use case is called roaming.

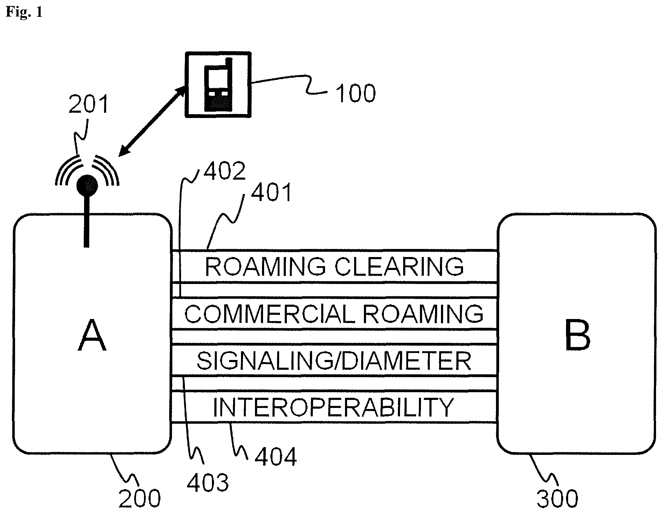

Considering Fig.1, for example, at a location A the network infrastructure is owned by MNO A and at a location B the network infrastructure is owned by MNO B. In case a customer 100 associated with MNO B uses a network service at location A, the customer 100 is referred to as a roaming customer and the network of MNO A is referred to as visited network in which a signaling or diameter communication with the home network, i.e. the network of MNO B takes place.

In the roaming use case typically the following operations are performed for the Signaling or Diameter communication to take place:
1) authentication of the user;
2) authorization of the user to use specific services;
3) enable the home operator to charge the users for the roaming; and
4) enable the home operator apply fair usage policies, throttling of the data and eventually cut the service based on the contract the user has.

Furthermore, the visited network operator will then charge the home network operator for the service delivery based on a commercial roaming deals between the two operators.

In addition, both network operators may also have other interoperability deals that are run directly or via third parties. For example SMS exchange could be delivered via a direct signaling interconnection between the two operators or via a third-party SMS P2P Hub.

In the above described state of the art roaming the home network operator is responsible of consumer billing. The home network operator is responsible to avoid bill shocks and apply fair usage policies, throttling and all necessary activities to make sure customers get the service accordingly to the individual customer contract. Visited network operator will invoice the home network operator for the roaming usage by home network users. Both networks are required to negotiate roaming deals to manage visitors, roamers, M2M, and IoT devices. Both networks will invoice each other for interoperability e.g. bidirectional SMS and/or voice traffic. The above described scenario generates roaming clearing costs and signaling costs and an organizational overhead.

Network operators are required to negotiate different contractual relationships for several "man in the middle" situations to enable a full roaming for their customers to work. This may include: Data Clearing Houses 401; a contractual framework to regulate roaming relationships 402; signaling and diameter providers 403 to enable the service of authentication, location update, subscriber info, SMS, and steering; and pure interconnection 404 for regulating and enabling any service.

In addition, roaming invoicing is complex and mostly driven by exchange of TAP Transferred Account Procedure, TAP, for GSM or Cellular Intercarrier Billing Exchange Record, CIBER, for CDMA, AMPS etc... files leading to frequent manual mistakes and manual processing of disputes.

A solution to the above problems is among the objects the present invention. The objects are archived by the subject-matter of the independent claims. The dependent claim relates to further aspects of the invention.

In one aspect, the invention provides a method for managing with a blockchain network a connection between at least one mobile user terminal device and at least one base station of a communication network; wherein the mobile user terminal devices comprises means for connecting to the blockchain network, means for participating in a blockchain process of the blockchain network, and means for using at least one connectivity service from the base station; wherein the base station comprises means for connecting to the blockchain network, means for participating in the blockchain process, and means for providing at least one connectivity service to the mobile user terminal device; wherein the blockchain network has an authentication function, a payment function, and a smart contract function; and wherein each of the mobile user terminal device and the base station has at least one public key and at least one private key. The method comprises the steps of:
a) the base station registering at least one smart contract corresponding to a connectivity service into the blockchain network with the private key of the base station;
b) the mobile user terminal device identifying the base station in the blockchain network based on the public key of the base station;
c) the mobile user terminal device signing in the blockchain network with the private key of the mobile user terminal device at least one smart contract corresponding to at least connectivity service;
d) the blockchain network authenticating the identity of the mobile user terminal device and/or the base station, preferably confirming the availability of service tokens or funds to pay for the connectivity service according to the smart contract, and storing the event in the blockchain; and
e) the base station providing the connectivity service according to the event stored in the blockchain network.

It is a further aspect of the invention that the payment of the service function either conducted via a crypto currency or via the transfer of a token, preferably a proprietary token, of the blockchain network. Preferably a usage token is used for this transfer.

It is a further aspect of the invention that the method further comprises the step of the mobile user terminal device and the base station negotiating and executing payment via the payment function of the blockchain network according to the signed smart contract from the mobile user terminal device to the base station and/or to an owner of the base station.

It is a further aspect of the invention that the method further comprises the step of the mobile user terminal device and the base station negotiating technical terms of the connectivity service using the smart contract function of the blockchain network.

It is a further aspect of the invention that the connectivity services comprise at least one of the following: Data transfer, SMS P2P termination, SMS A2P termination, MMS, and voice.

In one aspect, the invention provides a base station of a communication network comprising means for connecting to a blockchain network and participating in a blockchain process and means for providing at least one connectivity service to a mobile user terminal device; wherein the blockchain network has an authentication function, a payment function, preferably by means of transferring service tokens or funds, and a smart contract function; wherein base station has at least one public key and at least one private key; and wherein the base station is configured to register at least one smart contract corresponding to a connectivity service into the blockchain network with a base station private key; configured to provide the connectivity service to a mobile user terminal device according to an event stored in the blockchain network; and configured to be identified in the blockchain network based on the public key; wherein the blockchain network is configured to authenticate the identity of the mobile user terminal device and/or the base station; preferably confirming the availability of service tokens or funds to pay for the connectivity service according to the smart contract; and storing the event in the blockchain.

In one aspect, the invention provides a mobile user terminal device comprising means for connecting to a blockchain network and for participating in a blockchain process and means for using at least one connectivity service from a base station; wherein the blockchain network has an authentication function, a payment function, preferably by means of transferring ownership of a service token or funds, and a smart contract function; wherein the mobile user terminal device has at least one public key and at least one private key; and wherein the mobile user terminal device is configured to identify a base station in the blockchain network based on a base station public key and to sign in the blockchain network with the private key of the mobile user terminal device at least one smart contract corresponding to at least connectivity service; wherein the blockchain network is configured to authenticate the identity of the mobile user terminal device and/or the base station; preferably confirming the availability of service tokens or funds to pay for the connectivity service according to the smart contract; and storing the event in the blockchain.

In one aspect, the invention provides a computer program comprising instructions to cause a base station to execute the steps of the method according to any one of the aforementioned aspects of the invention.

In one aspect, the invention provides a computer program comprising instructions to cause a mobile user terminal device to execute the steps of the method according to any one of the aforementioned aspects of the invention.

In one aspect, the invention provides a computer program comprising instructions to cause a base station to execute the steps of:
a) registering at least one smart contract corresponding to a connectivity service into the blockchain network with the private key of the base station; and
e) providing the connectivity service to the mobile user terminal device according to the event stored in the blockchain network.

In one aspect, the invention provides a computer program comprising instructions to cause a mobile user terminal device to execute the steps of:
b) identifying the base station in the blockchain network based on the public key of the base station, and
c) signing in the blockchain network with the private key of the mobile user terminal device at least one smart contract corresponding to at least connectivity service.

In one aspect, the invention provides a computer-readable medium having stored thereon the computer program according to any one of the aforementioned aspects of the invention.

According to an aspect of the invention, a blockchain based network is provided which may remove most man in the middle currently present in the roaming ecosystem and beyond other advantages make roaming obsolete.

According to the invention any device, such as a mobile phone, SIM, M2M, or IoT, could start a blockchain communication with an antenna, which may have any communication standard, such as 2G, 3G, 4G, or5G and may, based on a smart contract, negotiate any service such as voice, SMS, and Data traffic, and may autonomously pay for the service with a cryptocurrency directly. All of this would happen without any control of the home network (HPLMN) and be totally ruled by the capability of the visited network (VPLMN) and the mobile device itself.

According to the invention, there will be no need of any communication with the home network and the invention would also render the concept of customer ownership obsolete for mobile operators, as steering could be overruled by the direct communication between antennas and mobile devices in need of connectivity.

The invention may have several implications for the mobile network operators: Smart contracts will make any communication with the home HLR/HSS redundant; roaming contractual negotiation and legal framework will be redundant, customer ownership will be redundant as any mobile network operator will own only the customer as much as they are connected to their respective antennas but lose the customer relationship in the same moment customer attach themselves to a competitor's antenna. However, at the same time operators will still need to have interoperability between each other for pure service delivery.

According to the invention, a blockchain based communication between antennas and devices is provided in a visited network. This will avoid any control by the home network. The visiting network it will be able to attract devices despite steering configuration of the home network and be able to close smart contract deals and get paid for the offered services directly.

### Brief Description of the Drawings

The above-described objects, advantages and features of the present invention, as well as others, will be more readily understood from the following detailed description of certain preferred embodiments of the invention, when considered in conjunction with the accompanying drawings in which:
Fig. 1 shows a schematic block diagram of a roaming scenario of the state of the art;
Fig. 2 shows a more detailed schematic block diagram a roaming scenario of the state of the art; and
Fig. 3 shows a detailed schematic block diagram a roaming scenario according to the invention.

### Detailed Description of the Drawings

Hereinafter, embodiments disclosed in this specification will be described in detail with reference to the accompanying drawings. In this specification, the same or equivalent components may be provided with the same or similar reference numbers even in different embodiments, and description thereof will not be repeated.

A singular representation may include a plural representation unless it represents a definitely different meaning from the context. In describing the present invention, if a detailed explanation for a related known technology or construction is considered to unnecessarily divert the gist of the present disclosure, such explanation has been omitted but would be understood by those skilled in the art.

It should be noted that the attached drawings are provided to facilitate understanding of the embodiments disclosed in this specification, and should not be construed as limiting the technical idea disclosed in this specification by the attached drawings.

The terminology used herein is for the purpose of describing particular embodiments only and is not intended to be limiting of the disclosure. It will be further understood that the terms "comprises" and/or "comprising," when used in this specification, specify the presence of stated features, integers, steps, operations, elements, and/or components.

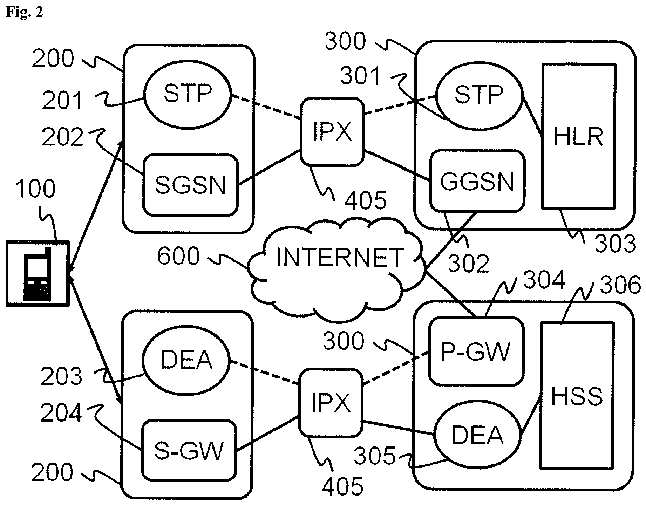

To further understand the complexity of the state of the art roaming, in Fig. 2 a more detailed schematic block diagram of a roaming scenario of the state of the art is shown. This figure illustrates, in particular, how a data connection into the internet 600 is routed in case of roaming.

The upper connection illustrates a 2G/3G connection and the lower connection illustrates a 4G/LTE connection from the costumer 100 to the internet 600. In case of a 2G/3G connection in the visited network 200, a first Signal Transfer Point, STP, 201 and a Serving GPRS support node, SGSN, 202 are serving a connection to the home network 300 via an Internetwork Packet Exchange, IPX, 405. In the home network a second Signal Transfer Point, STP, 301 is connected to a Home location register, HLR, 303 and a Gateway GPRS support node, GGSN, 302 is finally connected to the internet 600. The skilled person is aware of the relevant detailed description in the respective standard definition.

In case of a 4G/LTE connection in the visited network 200, a diameter edge agent; DEA, 203 and a Serving Gateway, S-GW, 204 are serving a connection to the home network 300 via a Internetwork Packet Exchange, IPX, 405. In the home network a second diameter edge agent, DEA, 305 is connected to a Home Subscriber Server, HSS; 306 and a Packet Data Network Gateway, P-GW, 304 is finally connected to the internet 600. The skilled person is aware of the relevant detailed description in the respective standard definition.

In other words, in both cases the connection is routed to the home network first, before the customer is connected to the internet. Apart from the considerable technical effort, which is prone to technical failure, the connection speed may also be limited, although the visited network 200 may actually have its own connection to the internet.

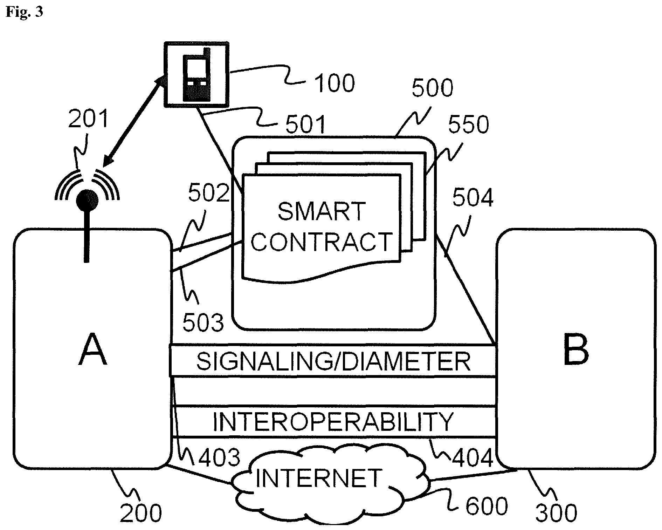

Fig. 3 illustrates a detailed schematic block diagram a roaming scenario according to the invention. According to the invention the customer device 100 is connected to MNO antenna 201. The antenna 201 is owned by MNO A. MNO A and MNO B may be connected for pure interoperability 404 and preferably also for a signaling or diameter connection 403. Both MNOs may be connected to the internet 600. However, this connection to the internet hereinafter is used as a synonym for a communication service, i.e. it is understood that embodiments of the invention relate alternatively or additionally to other communication services instead of the connection to the internet 600.

According to the invention, a blockchain 500 is used for managing the roaming. It is understood that said blockchain may have different implementations. In some embodiments of the invention, each or some of the actors, i.e. MNO A, MNO B, the device, and/or the antenna may be part of the network and operate an own blockchain node. Additionally or alternatively each or some of the actors may also operate a miner node in the blockchain network. However, in other embodiments the blockchain may be partially or totally independent of the actors and may be simply used as a service from a third party. The skilled person is aware of different methods to implement a connection 501, 502, 503 to a blockchain network 500.

According to the invention, the device 100 connects to the antenna 201 and signs a smart contract and/or multiple smart contracts according to needed network services. The smart contract ensures that the services can be funded by the devices itself or via sufficient amount of funds available at MNO B. The smart contract may also realize the payment for the connection services, preferably via a token and/or a crypto currency. The smart contract may also manage technical aspects of the connection service.

In one embodiment of the invention, the MNO A antenna 201, is identified in the blockchain 500 identified with an own public key. The antenna 201 would register 503 smart contracts 550 for each offered service, into the blockchain network 500. The registration is performed preferably by using the antennas 201 private key. In detail embodiments may relate to smart contracts 550 for IoT roaming, for SMS P2P termination, for SMS A2P termination, for MMS, and/or for voice.

In one embodiment of the invention, the mobile device 100 has the public key of the MNO A antenna 201. When connectivity is needed, the device 100 could then sign a smart contract 550 for each needed connectivity service, preferably using the devices own private key.

In one embodiment of the invention, the blockchain network 500 will validate the identity of the antenna 201 and preferably check the availability of funds of the mobile device owner, store the event in the blockchain database and inform the MNO A to provide the services for which there is the signed smart contract 550 is in place.

According to the invention the visited network operator A is directly responsible of consumer billing. The visited network operator A is purely responsible of the service offering and will need to specify said services as separate smart contracts 550. The visited network operator A may offer the service to the user until the device 100 is conform to the smart contract conditions, i.e. until the device has sufficient funds, and transactions are stored in a safe manner in the blockchain database to enable fund collection.

According to the invention there is no need for roaming deals to manage visitors, Roamers, M2M, and/or IoT devices. Furthermore, there is no need for the visited network operator A to invoice the home network 300 for roaming usage. Both networks will invoice each other for interoperability, e.g. bidirectional SMS /voice traffic, preferably also using the payment function in the blockchain.

There is the possibility that the home network B is not part of the blockchain network 500 but one of its customers roams into a blockchain enabled Visited network (VPLMN) with a blockchain enabled device 100. In said embodiments of the invention the visited network operator has no access to the balance information of the customer unless by using the classical roaming scenario and querying the HLR/HSS using the signaling or diameter channels 404. Thus while in most scenarios the signaling or diameter channel 404 is not necessary, in the present embodiment the channel is preferred.

However, in preferred embodiments of the invention the visited network operator A uses the blockchain communication to verify the identity of the device 100 and its related currency balance, which is also preferably stored in the public blockchain network 500, and enable the smart contract negotiation to allow the device 100 to use the services of its needs directly.

The visited network 200 may preferably offer the device 100 and the user a way to acquire credit toward the visited network operator A, preferably by converting a currency into an operator colored blockchain currency, preferably a crypto-currency.

In other words, the visited network operator A could be free to either let the user roam in the classic way or acquire the customer directly, invoice him and own the customer experience until the customer is connected to an antenna of another operator.

In embodiments of the invention, the device 100, when in need for connectivity, is configured to simply look for antennas 201 within its range for the best service provider matching its connectivity needs and connecting to it.

According to the invention, enabling a blockchain based communication between antennas 201 and devices 100 a visited network operator A will avoid any communication with the home network 300 and furthermore will not require any commercial roaming deals with the home network operator B.

## Claims

1. A method for managing with a blockchain network a connection between at least one mobile user terminal device and at least one base station of a communication network;
wherein the mobile user terminal devices comprises means for connecting to the blockchain network, means for participating in a blockchain process in the blockchain network, and means for using at least one connectivity service from the base station;
wherein the base station comprises means for connecting to the blockchain network, means for participating in the blockchain process, and means for providing at least one connectivity service to the mobile user terminal device;
wherein the blockchain network has an authentication function, a payment function, and a smart contract function;
wherein each of the mobile user terminal and the base station has at least one public key and at least one private key; and
wherein the method comprises the steps of:
a) the base station registering at least one smart contract corresponding to a connectivity service into the blockchain network with the private key of the base station;
b) the mobile user terminal device identifying the base station in the blockchain network based on the public key of the base station;
c) the mobile user terminal device signing in the blockchain network with the private key of the mobile user terminal device at least one smart contract corresponding to at least connectivity service;
d) the blockchain network authenticating the identity of the mobile user terminal device and/or the base station, confirming the availability of service tokens or funds to pay for the connectivity service according to the smart contract, and storing the event in the blockchain; and
e) the base station providing the connectivity service to the mobile user terminal device according to the event stored in the blockchain network.

2. The method according to claim 1, wherein the payment function transfers ownership of a token, preferably a proprietary token, of the blockchain network or funds.

3. The method according to claim 1 or 2, further comprising the step of
the mobile user terminal device and the base station negotiating and executing payment via the payment function of the blockchain network according to the signed smart contract from the mobile user terminal device to the base station and/or to an owner of the base station.

4. The method according to any one of claims 1 to 3, further comprising the step of
the mobile user terminal device and the base station negotiating technical terms of the connectivity service using the smart contract function of the blockchain network.

5. The method according to any one of claims 1 to 4, wherein the connectivity services comprise at least one of the following: Data transfer, SMS P2P termination, SMS A2P termination, MMS, and voice.

6. A base station of a communication network comprising means for connecting to a blockchain network and participating in a blockchain process and means for providing at least one connectivity service to a mobile user terminal device;
wherein the blockchain network has an authentication function, a payment function, preferably by means of transferring service tokens or funds, and a smart contract function;
wherein base station has at least one public key and at least one private key;
wherein the base station is configured to register at least one smart contract corresponding to a connectivity service into the blockchain network with a base station private key; configured to provide the connectivity service to a mobile user terminal device according to an event stored in the blockchain network; and configured to be identified in the blockchain network based on the public key;
wherein the at least one smart contract corresponding to a connectivity service is configured to be signed by the mobile user terminal device in the blockchain network with a private key of the mobile user terminal device; and wherein the blockchain network is configured to authenticate the identity of the mobile user terminal device and/or the base station; configured to confirm the availability of service tokens or funds to pay for the connectivity service according to the smart contract; and configured to store the event in the blockchain.

7. A mobile user terminal device comprising means for connecting to a blockchain network and for participating in a blockchain process and means for using at least one connectivity service from a base station;
wherein the blockchain network has an authentication function, a payment function, preferably by means of transferring ownership of a service token or funds, and a smart contract function;
wherein the mobile user terminal device has at least one public key and at least one private key; and
wherein mobile user terminal device is configured to identify a base station in the blockchain network based on a base station public key and to sign in the blockchain network with the private key of the mobile user terminal at least one smart contract corresponding to at least connectivity service.
wherein the blockchain network is configured to authenticate the identity of the mobile user device and/or the base station; configured to confirm the availability of service tokens or funds to pay for the connectivity service according to the smart contract; and configured to store the event in the blockchain.

8. A computer program comprising instructions to cause a base station of claim 6 to execute the steps of:
a) registering at least one smart contract corresponding to a connectivity service into the blockchain network with the private key of the base station; and
e) providing the connectivity service to the mobile user terminal device according to the event stored in the blockchain network.

9. A computer program comprising instructions to cause a mobile user terminal device of claim 7 to execute the steps of:
b) identifying the base station in the blockchain network based on the public key of the base station, and
c) signing in the blockchain network with the private key of the mobile user terminal device at least one smart contract corresponding to at least connectivity service.

10. A computer-readable medium having stored thereon the computer program of claim 8 or 9.

## Patentansprüche

1. Verfahren zum Verwalten mit einem Blockchain-Netzwerk einer Verbindung zwischen mindestens einem mobilen Benutzerendgerät und mindestens einer Basisstation eines Kommunikationsnetzwerks;
wobei das mobile Benutzerendgerät Mittel zum Verbinden mit dem Blockchain-Netzwerk, Mittel zum Teilnehmen an einem Blockchain-Prozess im Blockchain-Netzwerk und Mittel zum Verwenden mindestens eines Konnektivitätsdienstes von der Basisstation aufweist;
wobei die Basisstation Mittel zum Verbinden mit dem Blockchain-Netzwerk, Mittel zum Teilnehmen am Blockchain-Prozess und Mittel zum Bereitstellen mindestens eines Konnektivitätsdienstes für das mobile Benutzerendgerät aufweist;
wobei das Blockchain-Netzwerk eine Authentifizierungsfunktion, eine Zahlungsfunktion und eine intelligente Vertragsfunktion aufweist;
wobei jedes mobile Benutzerendgerät und die Basisstation mindestens einen öffentlichen Schlüssel und mindestens einen privaten Schlüssel aufweisen; und
wobei das Verfahren die Schritte aufweist:
a) Registrieren mindestens eines intelligenten Vertrags durch die Basisstation, der einem Konnektivitätsdienst im Blockchain-Netzwerk entspricht, mit dem privaten Schlüssel der Basisstation;
b) Identifizieren der Basisstation durch das mobile Benutzerendgerät im Blockchain-Netzwerk beruhend auf dem öffentlichen Schlüssel der Basisstation;
c) Signieren durch das mobile Benutzerendgerät im Blockchain-Netzwerk mit dem privaten Schlüssel des mobilen Benutzerendgeräts mindestens eines intelligenten Vertrags, der mindestens einem Konnektivitätsdienst entspricht;
d) Authentifizieren durch das Blockchain-Netzwerk der Identität des mobilen Benutzerendgeräts und/oder der Basisstation, Bestätigen der Verfügbarkeit von Dienst-Token oder Finanzmitteln, um den Konnektivitätsdienst gemäß dem intelligenten Vertrag zu bezahlen, und Speichern des Ereignisses in der Blockchain; und
e) Bereitstellen durch die Basisstation des Konnektivitätsdienstes dem mobilen Benutzerendgerät gemäß dem im Blockchain-Netzwerk gespeicherten Ereignis.

2. Verfahren nach Anspruch 1, wobei die Zahlungsfunktion das Eigentum an einem Token, vorzugsweise einem proprietären Token, des Blockchain-Netzwerks oder Finanzmittel überträgt.

3. Verfahren nach Anspruch 1 oder 2, das ferner den Schritt aufweist:
Aushandeln und Ausführen der Bezahlung durch das mobile Benutzerendgerät und die Basisstation über die Zahlungsfunktion des Blockchain-Netzwerks gemäß dem signierten intelligenten Vertrag vom mobilen Benutzerendgerät zur Basisstation und/oder zu einem Eigentümer der Basisstation aus.

4. Verfahren nach einem der Ansprüche 1 bis 3, das ferner den Schritt aufweist:
Aushandeln durch das mobile Benutzerendgerät und die Basisstation von technischen Bedingungen des Konnektivitätsdienstes unter Verwendung der intelligenten Vertragsfunktion des Blockchain-Netzwerks.

5. Verfahren nach einem der Ansprüche 1 bis 4, wobei die Konnektivitätsdienste mindestens eines der folgenden aufweisen: Datenübertragung, SMS P2P-Anschluss, SMS A2P-Anschluss, MMS und Sprache.

6. Basisstation eines Kommunikationsnetzwerks, die Mittel zum Verbinden mit einem Blockchain-Netzwerk und zum Teilnehmen an einem Blockchain-Prozess und Mittel zum Bereitstellen mindestens eines Konnektivitätsdienstes für ein mobiles Benutzerendgerät aufweist;
wobei das Blockchain-Netzwerk eine Authentifizierungsfunktion, eine Zahlungsfunktion, vorzugsweise mittels Übertragen von Dienst-Token oder Finanzmitteln, und eine intelligente Vertragsfunktion aufweist;
wobei die Basisstation mindestens einen öffentlichen Schlüssel und mindestens einen privaten Schlüssel aufweist;
wobei die Basisstation konfiguriert ist, mindestens einen intelligenten Vertrag, der einem Konnektivitätsdienst entspricht, im Blockchain-Netzwerk mit einem privaten Schlüssel der Basisstation zu registrieren; konfiguriert ist, den Konnektivitätsdienst einem mobilen Benutzerendgerät gemäß einem im Blockchain-Netzwerk gespeicherten Ereignis bereitzustellen; und konfiguriert ist, im Blockchain-Netzwerk beruhend auf dem öffentlichen Schlüssel identifiziert zu werden;
wobei der mindestens eine intelligente Vertrag, der einem Konnektivitätsdienst entspricht, konfiguriert ist, durch das mobile Benutzerendgerät im Blockchain-Netzwerk mit einem privaten Schlüssel des mobilen Benutzerendgeräts signiert zu werden; und wobei das Blockchain-Netzwerk konfiguriert ist, die Identität des mobilen Benutzerendgeräts und/oder der Basisstation zu authentifizieren; konfiguriert ist, die Verfügbarkeit von Dienst-Token oder Finanzmitteln zu bestätigen, um den Konnektivitätsdienst gemäß dem intelligenten Vertrag zu bezahlen; und konfiguriert ist, das Ereignis in der Blockchain zu speichern.

7. Mobiles Benutzerendgerät, das Mittel zum Verbinden mit einem Blockchain-Netzwerk und zum Teilnehmen an einem Blockchain-Prozess und Mittel zum Verwenden mindestens eines Konnektivitätsdienstes von einer Basisstation aufweist;
wobei das Blockchain-Netzwerk eine Authentifizierungsfunktion, eine Zahlungsfunktion, vorzugsweise mittels Übertragen von Dienst-Token oder Finanzmitteln, und eine intelligente Vertragsfunktion aufweist;
wobei das mobile Benutzerendgerät mindestens einen öffentlichen Schlüssel und mindestens einen privaten Schlüssel aufweist; und
wobei das mobile Benutzerendgerät konfiguriert ist, eine Basisstation im Blockchain-Netzwerk beruhend auf einem öffentlichen Schlüssel der Basisstation zu identifizieren und im Blockchain-Netzwerk mit dem privaten Schlüssel des mobilen Benutzerendgeräts mindestens einen intelligenten Vertrag zu signieren, der mindestens einem Konnektivitätsdienst entspricht;
wobei das Blockchain-Netzwerk konfiguriert ist, die Identität des mobilen Benutzerendgerät und/oder die Basisstation zu authentifizieren; konfiguriert ist, die Verfügbarkeit von Dienst-Token oder Finanzmitteln zu bestätigen, um den Konnektivitätsdienst gemäß dem intelligenten Vertrag zu bezahlen; und konfiguriert ist, das Ereignis in der Blockchain zu speichern.

8. Computerprogramm, das Befehle aufweist, um eine Basisstation nach Anspruch 6 zu veranlassen, die Schritte auszuführen:
a) Registrieren mindestens eines intelligenten Vertrags, der einem Konnektivitätsdienst entspricht, im Blockchain-Netzwerk mit dem privaten Schlüssel der Basisstation; und
e) Bereitstellen des Konnektivitätsdienstes dem mobilen Benutzerendgerät gemäß dem im Blockchain-Netzwerk gespeicherten Ereignis.

9. Computerprogramm, das Befehle aufweist, um ein mobiles Benutzerendgerät nach Anspruch 7 zu veranlassen, die Schritte auszuführen:
b) Identifizieren der Basisstation im Blockchain-Netzwerk beruhend auf dem öffentlichen Schlüssel der Basisstation, und
c) Signieren im Blockchain-Netzwerk mit dem privaten Schlüssel des mobilen Benutzerendgeräts mindestens eines intelligenten Vertrags, der mindestens einem Konnektivitätsdienst entspricht.

10. Computerlesbares Medium, auf dem das Computerprogramm nach Anspruch 8 oder 9 gespeichert ist.

## Revendications

1. Procédé de gestion par un réseau blockchain d'une connexion entre au moins un dispositif de terminal mobile d'utilisateur et au moins une station de base d'un réseau de communication;
où le dispositif de terminal mobile d'utilisateurs comprend des moyens de connexion au réseau blockchain, des moyens de participation à un processus blockchain dans le réseau blockchain, et des moyens d'utilisation d'au moins un service de connectivité de la station de base ;
où la station de base comprend des moyens de connexion au réseau blockchain, des moyens de participation au processus blockchain, et des moyens de fourniture d'au moins un service de connectivité au dispositif de terminal mobile d'utilisateur ;
où le réseau blockchain comporte une fonction d'authentification, une fonction de paiement et une fonction contractuelle intelligente ;
où le terminal mobile d'utilisateur et la station de base ont chacun au moins une clé publique et au moins une clé privée ; et
où ledit procédé comprend les étapes suivantes :
a) enregistrement par la station de base d'au moins un contrat intelligent correspondant à un service de connectivité dans le réseau blockchain avec la clé privée de la station de base ;
b) identification par le dispositif de terminal mobile d'utilisateur de la station de base dans le réseau blockchain sur la base de la clé publique de la station de base ;
c) signature par le dispositif de terminal mobile d'utilisateur d'au moins un contrat intelligent correspondant à au moins un service de connectivité, dans le réseau blockchain avec la clé privée du dispositif de terminal mobile d'utilisateur ;
d) authentification par le réseau blockchain de l'identité du dispositif de terminal mobile d'utilisateur et/ou de la station de base, confirmation de la disponibilité de jetons de service ou de fonds pour le paiement du service de connectivité en fonction du contrat intelligent, et mémorisation de l'événement dans le réseau blockchain ; et
e) fourniture par la station de base du service de connectivité au dispositif de terminal mobile d'utilisateur en fonction de l'événement mémorisé dans le réseau blockchain.

2. Procédé selon la revendication 1, où la fonction de paiement transfère la propriété d'un jeton, préférentiellement d'un jeton de propriétaire, du réseau blockchain, ou de fonds.

3. Procédé selon la revendication 1 ou la revendication 2, comprenant en outre l'étape de négociation et d'exécution d'un paiement par le dispositif de terminal mobile d'utilisateur et la station de base via la fonction de paiement du réseau blockchain en fonction du contrat intelligent signé, du dispositif de terminal mobile d'utilisateur à la station de base et/ou à un détenteur de la station de base.

4. Procédé selon l'une des revendications 1 à 3, comprenant en outre l'étape de négociation des conditions techniques du service de connectivité par le dispositif de terminal mobile d'utilisateur et la station de base, au moyen de la fonction contractuelle intelligente du réseau blockchain.

5. Procédé selon l'une des revendications 1 à 4, où les services de connectivité comprennent au moins un des services suivants : transfert de données, terminaison SMS P2P, terminaison SMS A2P, MMS et messagerie vocale.

6. Station de base d'un réseau de communication comprenant des moyens de connexion à un réseau blockchain et de participation à un processus blockchain et des moyens de fourniture d'au moins un service de connectivité à un dispositif de terminal mobile d'utilisateur ;
où le réseau blockchain comporte une fonction d'authentification, une fonction de paiement, préférentiellement au moyen d'un transfert de jetons de service ou de fonds, et une fonction contractuelle intelligente ;
où la station de base a au moins une clé publique et au moins une clé privée ;
où la station de base est prévue pour enregistrer au moins un contrat intelligent correspondant à un service de connectivité dans le réseau blockchain avec une clé privée de station de base ; pour fournir le service de connectivité à un dispositif de terminal mobile d'utilisateur en fonction d'un événement mémorisé dans le réseau blockchain ; et pour être identifiée dans le réseau blockchain sur la base de la clé publique ;
où ledit au moins un contrat intelligent correspondant à un service de connectivité est prévu pour être signé par le dispositif de terminal mobile d'utilisateur dans le réseau blockchain avec une clé privée du dispositif de terminal mobile d'utilisateur ; et où le réseau blockchain est prévu pour authentifier l'identité du dispositif de terminal mobile d'utilisateur et/ou de la station de base ; pour confirmer la disponibilité de jetons de service ou de fonds pour payer le service de connectivité en fonction du contrat intelligent ; et pour mémoriser l'événement dans le réseau blockchain.

7. Dispositif de terminal mobile d'utilisateur comprenant des moyens de connexion à un réseau blockchain et de participation à un processus blockchain, et des moyens d'utilisation d'au moins un service de connectivité d'une station de base ;
où le réseau blockchain comporte une fonction d'authentification, une fonction de paiement, préférentiellement au moyen d'un transfert de propriété d'un jeton de service ou de fonds, et une fonction contractuelle intelligente ;
où ledit dispositif de terminal mobile d'utilisateur a au moins une clé publique et au moins une clé privée ; et
où ledit dispositif de terminal mobile d'utilisateur est prévu pour identifier une station de base dans le réseau blockchain sur la base d'une clé publique de station de base et pour signer au moins un contrat intelligent correspondant à au moins un service de connectivité, dans le réseau blockchain avec la clé privée du terminal mobile d'utilisateur ;
où le réseau blockchain est prévu pour authentifier l'identité du dispositif de terminal mobile d'utilisateur et/ou de la station de base ; pour confirmer la disponibilité de jetons de service ou de fonds pour payer le service de connectivité en fonction du contrat intelligent ; et pour mémoriser l'événement dans le réseau blockchain.

8. Programme informatique comprenant des instructions entraînant l'exécution des étapes suivantes par la station de base selon la revendication 6 :
a) enregistrement d'au moins un contrat intelligent correspondant à un service de connectivité dans le réseau blockchain avec la clé privée de la station de base ; et
e) fourniture du service de connectivité au dispositif de terminal mobile d'utilisateur en fonction de l'événement mémorisé dans le réseau blockchain.

9. Programme informatique, comprenant des instructions entraînant l'exécution des étapes suivantes par le dispositif de terminal mobile d'utilisateur selon la revendication 7 :
b) identification de la station de base dans le réseau blockchain sur la base de la clé publique de la station de base, et
c) signature d'au moins un contrat intelligent correspondant à au moins un service de connectivité, dans le réseau blockchain avec la clé privée du dispositif de terminal mobile d'utilisateur.

10. Support d'enregistrement lisible par ordinateur, où est stocké le programme informatique selon la revendication 8 ou la revendication 9.
